# DEMANDE DE BREVET EUROPEEN

(11) **EP 3 842 947 A1**
(43) Date de publication de la demande: **30.06.2021**
(21) Numéro de dépôt: 20217150.0
(22) Date de dépôt: 23.12.2020
(51) Int. Cl.: G06F 11/30, G06F 11/34

(54) **METHODE ET SYSTEME INFORMATIQUE DE VALIDATION D'UNE INFRASTRUCTURE INFORMATIQUE PAR MINAGE**

(30) Priorité: 23.12.2019 FR 1915427
(71) Demandeur: Bull SAS, 78340 Les Clayes-sous-Bois (FR)
(72) Inventeur: FAURE, Guillaume, 38100 Grenoble (FR); MASSIOT, Alain, 31600 Muret (FR)
(74) Mandataire: Cabinet Camus Lebkiri

(57) **Abrégé**

La présente invention concerne un système informatique de contrôle qualité (1) d'une infrastructure informatique, le système étant caractérisé en ce qu'il comprend :
- Au moins une infrastructure informatique matérielle et logicielle (2), préférentiellement de super-calcul, centralisée ou décentralisée comprenant des ressources informatiques (21), préférentiellement à forte ressources de calcul, l'infrastructure informatique étant apte à se connecter à une base de données décentralisée de chaines de blocs et à réaliser des opérations de minage sur ladite chaine de blocs (5),
- un logiciel de gestion et d'automatisation (4) d'opérations informatiques, configuré pour automatiser la connexion de l'infrastructure informatique à la chaine de blocs, et le minage réalisé par les ressources informatiques (21), par exemple de calcul, d'au moins une, de préférence plusieurs infrastructures informatiques matérielles et logicielles,
- un logiciel de contrôle qualité associé à des sondes présentes dans l'infrastructure informatique, le logiciel de contrôle qualité étant configuré pour suivre les performances de l'infrastructure et des opérations de minage à l'aide desdites sondes, pour enregistrer lesdites performances dans une base de données (6) de l'infrastructure ou du système et pour comparer les valeurs des performances enregistrées à des valeurs de performances contrôle, et de préférence à indiquer, suite à la comparaison, le statut du contrôle qualité de l'infrastructure informatique.

## Description

### DOMAINE TECHNIQUE DE L'INVENTION

La présente invention concerne de manière générale le domaine des méthodes de validation de systèmes informatiques, en particulier la validation de supercalculateurs.

### ETAT DE LA TECHNIQUE ANTERIEURE

Il est connu que les procédés de contrôle qualité et de validation sont aujourd'hui longs et assez couteux, il pourrait donc être intéressant de tirer parti des ressources de calcul mises en œuvre lors de ces procédés, ressources jusqu'ici utilisées dans le seul but de mesurer les performances brutes d'un supercalculateur.

En effet, la puissance consommée d'un super-ordinateur lors d'une opération de contrôle qualité peut par exemple être de 500kWh, auquel il faut ajouter plus ou moins la même puissance consommée par le système de refroidissement, 95% de l'énergie utilisée par un super-ordinateur étant relâchée en chaleur. Dans ce contexte, réorienter l'énergie utilisée pour produire une richesse permet particulièrement avantageux, au vu du coût d'une telle opération de contrôle qualité, réalisée sur chaque super-ordinateur assemblé.

WO2019/116375, enseigne un système dans lequel les excès d'électricité, ici d'énergie solaire, sont utilisées dans un système à des fins de minage, une activité connue pour être très énergivore.

D'autres réutilisations ont été divulguées. Par exemple, le brevet CN108458472 décrit un dispositif de chauffage d'eau, et tire profit de l'eau chaude récupéré dans un système de refroidissement par eau de blocs de GPU et CPU d'une installation de minage d'une chaine de blocs (blockchain), ces serveurs produisant beaucoup de chaleur lors de leur utilisation. Ainsi, la production de chaleur est réorientée dans un but utile et on a moins de perte d'énergie, ici moins de perte de chaleur.

### EXPOSE DE L'INVENTION

Les processus de validation d'un supercalculateur nécessitent de grosses ressources, ont besoin d'être répétables et d'être traçables. Ces ressources sont utilisées actuellement sans but autre que la validation elle-même, car il est attendu qu'un supercalculateur sorte d'une chaine de production et soit validé avant de lui faire réaliser des opérations techniques telles que des opérations de calcul météorologiques, d'intelligence artificielle ou tout autre domaine qui nécessite beaucoup de ressources, particulièrement au niveau des cartes graphiques, et donc les calculs doivent être sûrs. De plus, cette validation doit de préférence être réalisée de façon automatisée. Il pourrait donc être intéressant de tirer parti des ressources de calcul mises en œuvre lors d'une tâche utile, tel que le minage, pour valider la qualité d'un assemblage, par exemple d'un supercalculateur. Le minage ne doit alors pas durer plus longtemps qu'une validation, afin de mettre en place un programme d'optimisation des coûts par utilisation du minage, tout en respectant les contraintes de temps imparti, et de répétabilité.

La présente invention a donc pour objet de proposer une méthode et un système informatique de validation d'une infrastructure informatique par minage, permettant de palier au moins une partie des inconvénients de l'art antérieur.

**Ce** but est atteint par un système informatique de contrôle qualité d'une infrastructure informatique, le système comprenant :
- Au moins une infrastructure informatique matérielle et logicielle (2), préférentiellement de super-calcul, centralisée ou décentralisée comprenant des ressources informatiques (21), préférentiellement à forte ressources de calcul, l'infrastructure informatique étant apte à se connecter à une base de données décentralisée de chaines de blocs et à réaliser des opérations de minage sur ladite chaine de blocs (5),
- un logiciel de gestion et d'automatisation (4) d'opérations informatiques, configuré pour automatiser la connexion de l'infrastructure informatique à la chaine de blocs, et le minage réalisé par les ressources informatiques (21), par exemple de calcul, d'au moins une, de préférence plusieurs infrastructures informatiques matérielles et logicielles,
- un logiciel de contrôle qualité associé à des sondes présentes dans l'infrastructure informatique, le logiciel de contrôle qualité étant configuré pour suivre les performances de l'infrastructure et des opérations de minage à l'aide desdites sondes, pour enregistrer lesdites performances dans une base de données (6) de l'infrastructure ou du système et pour comparer les valeurs des performances enregistrées à des valeurs de performances contrôle, et de préférence à indiquer, suite à la comparaison, le statut du contrôle qualité de l'infrastructure informatique.

Selon une particularité, le logiciel de contrôle qualité est configuré pour fournir lesdites valeurs de performances contrôle par la réalisation d'un test classique de contrôle qualité, par exemple par la réalisation du test du « Linpack's Highly Parallel Computing benchmark », (HPLinpack), le logiciel étant apte à calculer et enregistrer des valeurs contrôle, par exemple un encadrement de valeurs contrôle, à partir des valeurs mesurées lors dudit test classique.

Selon une autre particularité, les ressources informatiques comprennent au moins un processeur graphique GPU ou au moins un processeur ASIC spécialisé, le minage étant réalisé par ledit au moins un processeur graphique GPU de l'infrastructure ou ledit au moins un processeur ASIC spécialisé.

Selon une autre particularité, le logiciel de gestion et d'automatisation (4) est apte à faire réaliser le minage par seulement un processeur spécifique, une partie des processeurs, ou encore la totalité des processeurs que comprennent les ressources informatiques de l'infrastructure informatique.

Selon une autre particularité, le logiciel de gestion et d'automatisation (4) est apte à faire réaliser le minage par des ressources informatiques (21) de plusieurs infrastructures informatiques matérielles et logicielles.

Selon une autre particularité, la base de données du système sur laquelle les performances de minage sont enregistrées, fait partie des moyens de stockage de l'infrastructure informatique matérielle et logicielle.

Selon une autre particularité, le logiciel de gestion et d'automatisation permet l'utilisation de plusieurs algorithmes différents de minage pour miner plusieurs chaines de blocs différentes en même temps.

Selon une autre particularité, le logiciel de contrôle qualité est exécuté par ladite infrastructure informatique matérielle et logicielle à valider pour réaliser son propre contrôle qualité. Les résultats sont ensuite comparés avec du matériel équivalent provenant d'une infrastructure de test classique. Une matrice comparative sera créée à chaque nouvelle génération de matériel.

Selon une autre particularité, l'infrastructure informatique matérielle et logicielle est orientée pour le calcul intensif et pour l'intelligence artificielle.

Selon une autre particularité, l'infrastructure informatique matérielle et logicielle comprend un système modulaire de lames refroidies par air, conçu spécialement pour le calcul intensif ou haute performance et comprenant plusieurs processeurs.

L'invention concerne aussi un procédé de contrôle qualité d'une infrastructure informatique matérielle et logicielle par un système selon l'une quelconque des revendications précédentes, caractérisée en ce qu'il comprend les étapes suivantes :
- Connexion de l'infrastructure informatique matérielle et logicielle à la base de données blockchain par le logiciel de gestion et d'automatisation d'opérations informatiques,
- Minage par les ressources informatiques de l'infrastructure informatique d'une chaine de blocs d'au moins une base de données de chaines de blocs par l'intermédiaire du logiciel de gestion et d'automatisation d'opérations informatiques,
- Suivi des performances des opérations de minage et enregistrement des valeurs desdites performances dans une base de données du système.

Selon une autre particularité, le procédé comprend en outre une étape de **comparaison** des valeurs desdites performances enregistrées à des valeurs de performances contrôle.

Selon une autre particularité, le procédé comprend en outre une étape **d'indication,** suite à la comparaison, du statut du contrôle qualité de l'infrastructure informatique.

Selon une autre particularité, le minage par les ressources informatiques est réalisé sur au moins deux chaines de blocs différentes.

### BREVE DESCRIPTION DES FIGURES

D'autres caractéristiques, détails et avantages de l'invention ressortiront à la lecture de la description qui suit en référence aux figures annexées, qui illustre :

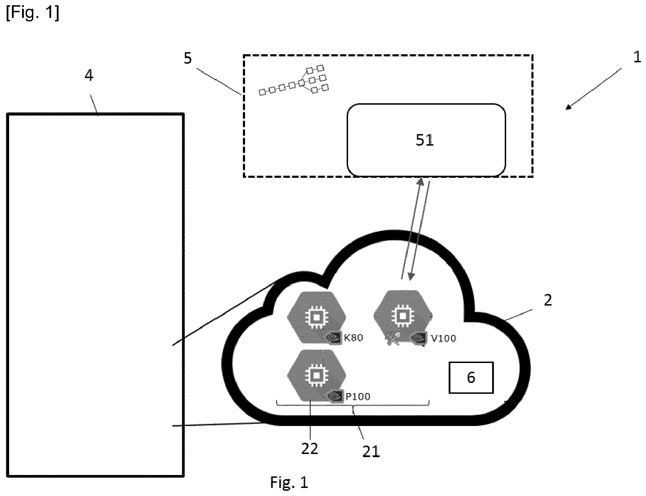

- [Fig. 1] représente de façon schématique le système informatique de validation selon certains modes de réalisation

### DESCRIPTION DETAILLEE DE L'INVENTION

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

Par « super-calcul » ou « supercalculateur », on entend des infrastructures spécialisées dans la réalisation de taches demandant d'importantes ressources (21) en calcul, par exemple, pour l'Intelligence Artificielle (IA), et plus spécifiquement le *Deep Learning (apprentissage profond).* Ces technologies sont supportées en particulier par des cartes graphiques (GPU) de dernière génération. Les supercalculateurs spécialisés dans ces domaines d'activité intègrent ainsi des cartes GPU orientées pour le calcul intensif et pour l'intelligence artificielle. Le processus de contrôle qualité et validation d'une chaine de de production de supercalculateurs, par exemple pour les serveurs Bull « Sequana », est long et assez couteux afin de garantir la robustesse et la stabilité des solutions livrées. D'autres exemples de supercalculateurs pourront être trouvés dans le « TOP500 », un projet de classification, par ordre décroissant, des 500 superordinateurs les plus puissants au monde. Ainsi, on y trouve par exemple les systèmes « Summit », « Sierra », « Frontera » ou encore « Sequana ».

A titre d'exemple, un « Sequana » est un super-ordinateur composé de 96 lames, chaque lame comprenant 3 CPU et jusqu'à 6 GPU.

**Ces** serveurs sont donc particulièrement adaptés aux processus dans lesquels la puissance de calcul joue un rôle central, tel que les processus de validation des transactions dans une chaine de blocs (5) (blockchain). De plus, la personne du réseau, appelé *mineur,* qui établit la validité du bloc de transactions reçoit de la crypto-monnaie pour « service rendu ».

Aujourd'hui les mineurs utilisent des ASIC pour optimiser leur rendement. Toutefois, certains algorithmes de hash utilisent encore la puissance de calcul des cartes graphiques, comme c'est le cas pour la crypto-monnaie Ether de la BlockChain Ethereum™.

L'invention concerne ainsi une méthode de validation automatisée permettant de réorienter la puissance utilisée lors des contrôles qualités de supercalculateurs, pour la diriger vers une fonction rémunératrice, à savoir du minage de blockchain, ou chaine de blocs (5).

**De** manière générale, la présente invention comporte un système informatique de contrôle qualité (1) d'une infrastructure informatique, le système comprenant au moins :
- Au moins une infrastructure informatique matérielle et logicielle (2), préférentiellement de super-calcul, centralisée ou décentralisée comprenant des ressources informatiques (21), préférentiellement à forte ressources de calcul, l'infrastructure informatique étant apte à se connecter à une base de données décentralisée de chaines de blocs et à réaliser des opérations de minage sur ladite chaine de blocs (5),
- un logiciel de gestion et d'automatisation (4) d'opérations informatiques, configuré pour automatiser la connexion de l'infrastructure informatique à la chaine de blocs, et le minage réalisé par les ressources informatiques (21), par exemple de calcul, d'au moins une, de préférence plusieurs infrastructures informatiques matérielles et logicielles,
- un logiciel de contrôle qualité associé à des sondes présentes dans l'infrastructure informatique, le logiciel de contrôle qualité étant configuré pour suivre les performances de l'infrastructure et des opérations de minage à l'aide desdites sondes, pour enregistrer lesdites performances dans une base de données (6) de l'infrastructure ou du système.

Ce système permet d'utiliser la puissance de calcul du supercalculateur et notamment de sa carte GPU et les capacités de stockage de cette dernière pour faire du minage puis ensuite utiliser les données ou les résultats pour réaliser un contrôle qualité grâce au logiciel de contrôle qualité.

Dans certains modes de réalisation, le logiciel de gestion et d'automatisation comprend au moins un logiciel de minage et un ordonnanceur.

On entend par « minage », un processus itératif jusqu'à obtention d'une valeur de hash (hachage) valide d'un bloc. Ce processus nécessite d'importantes ressources de calcul en raison du grand nombre d'essais nécessaire pour valider ledit bloc. Ainsi, un message (une transaction) est chiffré par un algorithme de Hash (Hachage). Les mineurs valident la transaction au moyen de techniques cryptographiques réalisées avec leur matériel informatique pour trouver la bonne valeur de hash.

Dans certains modes de réalisation, les ressources informatiques comprennent au moins un processeur graphique GPU ou au moins un processeur ASIC spécialisé, le minage étant réalisé par ledit au moins un processeur graphique GPU de l'infrastructure ou ledit au moins un processeur ASIC spécialisé

Avantageusement, dans le minage, les GPU/CPU sont totalement indépendants les uns des autres, et ne subissent pas les mauvaises performances d'un autre CPU/GPU. Il est également possible de tester un seul GPU/CPU suite à défaut, sans devoir retester toute l'infrastructure.

Un avantage supplémentaire est qu'un programme de minage GPU n'utilisera quasiment pas de CPU, la blockchain fonctionnant sur un type spécifique de composants sans utiliser les autres. Dans certains modes de réalisation, il est donc possible de mesurer les performances CPU et GPU en parallèle, ce qui n'est pas réalisé actuellement dans le cadre d'une validation classique. Dans certains modes de réalisation, les tests de CPU et GPU sont ainsi réalisés simultanément, et indépendamment l'un de l'autre.

Dans certains modes de réalisation, la durée du test est de 10 minutes minimum, afin de faire monter l'infrastructure en température. Les performances maximales du matériel sont généralement atteintes en moins de 2 minutes. Dans certains modes de réalisation, la durée du test est égale à celle du test classique, par exemple par le logiciel HPL Linpack, par exemple entre 45 minutes et une heure. Une durée définie est à imposer pour le processus de minage afin d'avoir des données fiables et répétables. Dans les systèmes d'exploitation, l'ordonnanceur, aussi appelé scheduler en anglais, désigne le composant du noyau du système d'exploitation choisissant l'ordre d'exécution des processus sur les processeurs d'un ordinateur. Un ordonnanceur est nécessaire pour déterminer quel processus sera exécuté sur quel processeur. Ainsi, c'est lui qui permet de choisir quel processeur va miner et quand.

Dans certains modes de réalisation, le logiciel de gestion et d'automatisation permet de choisir d'utiliser tous les processeurs d'une infrastructure informatique, tel qu'un super-ordinateur ou supercalculateur, ou au contraire de n'en utiliser qu'une partie des ressources informatiques, voire un seul processeur. Cela permet entre autres de contrôler ou recontrôler une lame de processeur, ou un processeur particulier.

Dans certains modes de réalisation, le logiciel de gestion et d'automatisation (4) d'opérations informatiques, est configuré pour intégrer et automatiser le minage réalisé par les ressources informatiques (21), par exemple de calcul, de chacunes des infrastructures informatiques matérielle et logicielle, et notamment réalisé par au moins un GPU de l'infrastructure ou au moins un processeur ASIC spécialisé à forte ressources de calcul.

L'automatisation d'un minage réalisé par les ressources informatiques (21), par exemple de calcul, permet d'intégrer l'activité de minage à un contrôle qualité ou de validation d'une infrastructure informatique, par exemple un supercalculateur.

Dans certains modes de réalisation, le logiciel de contrôle qualité est configuré pour comparer les valeurs des performances enregistrées à des valeurs seuils prédéfinies, et de préférence à indiquer, suite à la comparaison, le statut du contrôle qualité de l'infrastructure informatique.

Dans certains modes de réalisation, le logiciel de contrôle qualité est configuré pour fournir lesdites valeurs de performances contrôle par la réalisation d'un test classique de contrôle qualité, par exemple par la réalisation du test du « Linpack's Highly Parallel Computing benchmark », (HPLinpack), le logiciel étant apte à calculer et enregistrer des valeurs contrôle, par exemple un encadrement de valeurs contrôle, à partir des valeurs mesurées lors dudit test classique.

Dans certains modes de réalisation, les valeurs contrôle sont enregistrées dans une matrice de comparaison, celle-ci étant réalisée à partir d'un contrôle qualité classique réalisée sur les mêmes ressources informatiques au sein du même modèle d'infrastructure informatique. De manière avantageuse, cela permet d'obtenir des valeurs standards qui serviront de comparatifs, et qui permettent de calculer des valeurs contrôle, des valeurs-seuils et/ou des encadrements de valeurs contrôle.

Par valeurs contrôle, on comprend des valeurs qu'il faut atteindre, dépasser ou ne pas dépasser, ou des valeurs calculées à partir de valeurs témoins ou standards pour obtenir un encadrement de valeurs à atteindre. Par exemple, +/-5% d'une valeur témoin.

Dans certains modes de réalisation, le système est apte à réaliser le contrôle qualité de façon automatisé.

Dans certains modes de réalisation, la base de données du système, sur laquelle les valeurs des performances de minage sont enregistrées, fait partie des moyens de stockage de l'infrastructure informatique matérielle et logicielle (2).

Dans certains modes de réalisation, le logiciel de gestion et d'automatisation (4) permet l'utilisation de plusieurs algorithmes différents de minage pour miner plusieurs chaines de blocs (5) différentes en même temps, par exemple Ethereum™ et Monero™. Il est aussi possible de changer de chaines de blocs à miner, en fonction des périodes et de facteurs tels que le rendement de la blockchain, sa demande en ressources, le type de ressources demandé, etc...

Dans certains modes de réalisation, le logiciel de contrôle qualité est exécuté par ladite infrastructure informatique matérielle et logicielle pour réaliser son propre contrôle qualité. Les résultats pourront ensuite comparés avec du matériel équivalent provenant d'une infrastructure de test classique. Une matrice comparative sera créée à chaque nouvelle génération de matériel.

Dans certains modes de réalisation, l'infrastructure informatique matérielle et logicielle (2) est orientée pour le calcul intensif et pour l'intelligence artificielle.

Dans certains modes de réalisation, l'infrastructure informatique matérielle et logicielle (2) comprend un système modulaire de lames refroidies par air, conçu spécialement pour le calcul intensif ou haute performance et comprenant plusieurs processeurs. L'infrastructure informatique peut comprendre un ou plusieurs systèmes, tels que Sequana, Sunway, ou d'autres types de super-ordinateurs ou supercalculateurs.

Dans le cas des supercalculateurs, il est question en général d'un réseau interne (de machine à machine) Très Haut Débit (plus de 40Gbits/s) et faible latence (moins de 1 microseconde). La connexion s'effectue soit en câble cuivre, soit en câble fibre selon les contraintes de conception.

Il est à noter que le système informatique ne nécessite pas de réseau internet de haute performance. Il est cependant préférable d'au moins fournir une connexion de type ADSL ou supérieure, et que celle-ci soit stable. En effet, l'important est de pouvoir établir la connexion entre l'infrastructure et la base de données chaines de blocs. Ainsi, dans certains modes de réalisations, la base de données de chaines de blocs est supportée en interne, et l'infrastructure s'y connecte sans passer par le réseau internet.

Dans certains modes de réalisation, le procédé de contrôle qualité d'une infrastructure informatique matérielle et logicielle (2) par un système selon l'une quelconque des revendications précédentes, caractérisée en ce qu'elle comprend les étapes suivantes :
- Connexion de l'infrastructure informatique matérielle et logicielle (2) à la base de données blockchain par le logiciel de gestion et d'automatisation (4) d'opérations informatiques,
- Minage par les ressources informatiques (21) de l'infrastructure informatique d'une chaine de blocs d'au moins une base de données de chaines de blocs (5) par l'intermédiaire du logiciel de gestion et d'automatisation (4) d'opérations informatiques,
- Suivi des performances des opérations de minage et enregistrement des valeurs desdites performances dans une base de données du système.

Dans certains modes de réalisation, le procédé comprend en outre une étape de **comparaison** des valeurs desdites performances enregistrées à des valeurs de performances contrôle.

Dans certains modes de réalisation, le procédé comprend en outre une étape **d'indication,** suite à la comparaison, du statut du contrôle qualité de l'infrastructure informatique

De manière avantageuse, ces valeurs contrôle sont établies en exécutant un outil de validation « classique » sur une machine. Une fois le procédé de validation selon la présente invention réalisée, on obtient une matrice d'équivalence entre les deux outils, qui permet ensuite de renseigner sur la performance d'une infrastructure n'étant évaluée qu'avec l'outil blockchain.

Dans certains modes de réalisation, le procédé est automatisé.

Dans certains modes de réalisation, le minage par les ressources informatiques (21) est réalisé sur au moins deux blockchains différentes. Cela permet avantageusement d'améliorer le rendement du minage en optimisant l'utilisation des ressources.

Dans certains modes de réalisation, les logiciels sont modifiés de façon à intégrer les caractéristiques des GPU utilisés, car ces GPU ne sont pas standards. Il faut donc revoir les paramètres afin de les optimiser pour exploiter au mieux les ressources GPU.

Dans certains modes de réalisation, le procédé de validation utilise d'autres chaines de blocs utilisant d'autres ressources du supercalculateur afin de valider ces dites autres ressources, telles que la capacité de stockage, ou le CPU. D'autres types de chaines de blocs peuvent utiliser la puissance de calcul partagée autrement, et la rétribuer autrement. Par exemple, et de façon non limitative, les utilisateurs d'iExec utilisent la puissance de calcul partagée par un supercalculateur pour exécuter des applications et/ou réaliser des calculs en échange de tokens.

Dans certains modes de réalisation, le procédé comprend en outre une étape dans laquelle l'infrastructure informatique met à disposition son matériel de stockage de données à des fins de minage. On parle alors de minage par disque dur ou par stockage. Avantageusement, cela permet à l'infrastructure de mettre à disposition une partie de son stockage pour que soit réalisé dessus des opérations de minage, contre rétribution.

Dans des modes de réalisation, comme par exemple illustré de manière non limitative à la figure 1, le système comprend un logiciel de gestion et d'automatisation (4) des ressources (21) et de leur utilisation de façon automatique. Ce logiciel opère des programmes d'automatisation, et est connecté à une base de données décentralisée de chaines de blocs. Celles-ci sont gérées par le logiciel de gestion pour rejoindre à distance un groupe de mineurs, dits aussi pool de mineurs (51), d'une chaine de blocs, et réaliser des opérations de minage informatique sur celles-ci. Ces opérations de minage génèrent des rétributions sous forme de monnaie virtuelle, et des données. Dans certains modes de réalisation, ces données sont mesurées par des sondes présentes dans l'infrastructure informatique, et enregistrées dans une base de données (6), préférentiellement de l'infrastructure ou du système. Ces données peuvent par exemple être la vitesse de calcul en temps réel de l'infrastructure. Cette vitesse de calcul peut être mesurée en « hash/seconde » avec toutes les variantes : Kilo-hash/s, Mega-hash/s etc... Dans certains modes de réalisation, elle peut être mesurée directement par l'outil de minage. D'autres données peuvent être mesurées, comme la température de l'infrastructure, ou la consommation électrique. Ce sont les valeurs mesurées qui permettent de surveiller et d'étudier les performances desdites ressources de calcul, à des fins de contrôle qualité. Elles permettent, après comparaison avec des valeurs contrôle, par exemple issues d'une évaluation classique, de valider que l'infrastructure atteint bien les performances annoncées ou attendues. Dans certains modes de réalisation non représentés, le logiciel de gestion est configuré pour récupérer lesdites données de performance issues du minage et exécuter un programme configuré pour évaluer les performances de ladite infrastructure informatique à partir desdites données de performances, pour valider le contrôle qualité. Dans d'autres modes de réalisation, le logiciel de gestion, ou l'infrastructure informatique est configuré pour envoyer lesdites données de performance issues du minage à un logiciel de contrôle qualité (non représenté) exécutant un programme configuré pour évaluer les performances de ladite infrastructure informatique à partir desdites données de performances, et valider le contrôle qualité quand les performances sont considérées suffisantes.

Le tableau ci-dessous présente un exemple non limitatif des données que peuvent récupérer les sondes présentes dans l'infrastructure informatique, par exemple en fonction des ressources de calcul utilisées. L'ensemble de ces paramètres est analysé par un logiciel de contrôle qualité qui peut alors valider les performances de l'infrastructure informatique dans le cas où lesdites données remplissent des conditions de qualité préalablement déterminées.

**[Table 1]**

| | Nvidia P100 | Nvidia V100 |
|---|---|---|
| Température (nvidia-smi) | 73°C | 76°C |
| Hashrate Ethereum | 65Mh/s | 85Mh/s |
| Charge CPU (htop) | < 1% | < 1% |
| Charge GPU (nvidia-smi) | 100% | 100% |
| Charge mémoire vidéo (nvidia-smi) | 3,2 Go/16 Go | 3,2 Go/16 Go |
| Conso. Electrique (nvidia-smi) | 238W/250W | 281W/300W |
| Charge réseau (dstat) | Max 100ko/s | Max 100ko/s |
| Charge disque (dstat) | N/A | N/A |

Ainsi, selon le tableau ci-dessus, un GPU V100 doit avoir une vitesse de 85Mh/s (+/- 3%) pour être validé. Pour 150 GPU dans un super calculateur, les GPU étant traités indépendamment, les performances attendues dudit supercalculateur sont donc de (150*85) = 12750Mh/s ou 12,75 Gh/s (+/-3%).

On comprendra aisément à la lecture de la présente demande que les particularités de la présente invention, comme généralement décrits et illustrés dans les figures, puissent être arrangés et conçus selon une grande variété de configurations différentes. Ainsi, la description de la présente invention et les figures afférentes ne sont pas prévues pour limiter la portée de l'invention mais représentent simplement des modes de réalisation choisis.

L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

**I**l doit être évident pour les personnes versées dans l'art que la présente invention permet des modes de réalisation sous de nombreuses autres formes spécifiques sans l'éloigner du domaine défini par la portée des revendications jointes, ils doivent être considérés à titre d'illustration et l'invention ne doit pas être limitée aux détails donnés ci-dessus.

### LISTE DES SIGNES DE REFERENCE

1. Système informatique de validation
2. Infrastructure informatique matérielle et logicielle
21. Ressources de calcul
22. Processeur
4. Logiciel de gestion et d'automatisation
5. Base de données blockchain, ou chaine de blocs
51. Groupe « Pool » de mineurs
6. Base de données de l'infrastructure ou du système
7.
8.
9.
10.
11.
30.
31.
32.
100.
105.
110.

## Revendications

1. Système informatique de contrôle qualité (1) d'une infrastructure informatique, le système étant **caractérisé en ce qu'**il comprend :
- Au moins une infrastructure informatique matérielle et logicielle (2), préférentiellement de super-calcul, centralisée ou décentralisée comprenant des ressources informatiques (21), préférentiellement à forte ressources de calcul, l'infrastructure informatique étant apte à se connecter à une base de données décentralisée de chaines de blocs et à réaliser des opérations de minage sur ladite chaine de blocs (5),
- un logiciel de gestion et d'automatisation (4) d'opérations informatiques, configuré pour automatiser la connexion de l'infrastructure informatique à la chaine de blocs, et le minage réalisé par les ressources informatiques (21), par exemple de calcul, d'au moins une, de préférence plusieurs infrastructures informatiques matérielles et logicielles,
- un logiciel de contrôle qualité associé à des sondes présentes dans l'infrastructure informatique, le logiciel de contrôle qualité étant configuré pour suivre les performances de l'infrastructure et des opérations de minage à l'aide desdites sondes, pour enregistrer lesdites performances dans une base de données (6) de l'infrastructure ou du système et pour comparer les valeurs des performances enregistrées à des valeurs de performances contrôle, et de préférence à indiquer, suite à la comparaison, le statut du contrôle qualité de l'infrastructure informatique.

2. Système selon la revendication précédente, dans laquelle le logiciel de contrôle qualité est configuré pour fournir lesdites valeurs de performances contrôle par la réalisation d'un test classique de contrôle qualité, par exemple par la réalisation du test du « Linpack's Highly Parallel Computing benchmark », (HPLinpack), le logiciel étant apte à calculer et enregistrer des valeurs contrôle, par exemple un encadrement de valeurs contrôle, à partir des valeurs mesurées lors dudit test classique.

3. Système selon l'une quelconque des revendications précédentes, dans lequel les ressources informatiques comprennent au moins un processeur graphique GPU ou au moins un processeur ASIC spécialisé, le minage étant réalisé par ledit au moins un processeur graphique GPU de l'infrastructure ou ledit au moins un processeur ASIC spécialisé.

4. Système selon l'une quelconque des revendications précédentes, dans lequel le logiciel de gestion et d'automatisation (4) est apte à faire réaliser le minage par seulement un processeur spécifique, une partie des processeurs, ou encore la totalité des processeurs que comprennent les ressources informatiques de l'infrastructure informatique.

5. Système selon l'une quelconque des revendications précédentes, dans lequel le logiciel de gestion et d'automatisation (4) est apte à faire réaliser le minage par des ressources informatiques (21) de plusieurs infrastructures informatiques matérielles et logicielles.

6. Système selon l'une quelconque des revendications précédentes, dans laquelle la base de données du système, sur laquelle les valeurs des performances de minage sont enregistrées, fait partie des moyens de stockage de l'infrastructure informatique matérielle et logicielle (2).

7. Système selon l'une quelconque des revendications précédentes, dans laquelle le logiciel de gestion et d'automatisation (4) permet l'utilisation de plusieurs algorithmes différents de minage pour miner plusieurs chaines de blocs (5) différentes en même temps.

8. Système selon l'une quelconque des revendications précédentes, dans lequel le logiciel de contrôle qualité est exécuté par ladite infrastructure informatique matérielle et logicielle pour réaliser son propre contrôle qualité.

9. Système selon l'une quelconque des revendications précédentes, dans lequel l'infrastructure informatique matérielle et logicielle (2) est orientée pour le calcul intensif et pour l'intelligence artificielle.

10. Système selon l'une quelconque des revendications précédentes, dans lequel l'infrastructure informatique matérielle et logicielle (2) comprend un système modulaire de lames refroidies par air, conçu spécialement pour le calcul intensif ou haute performance et comprenant plusieurs processeurs.

11. Procédé de contrôle qualité d'une infrastructure informatique matérielle et logicielle (2) par un système selon l'une quelconque des revendications précédentes, **caractérisée en ce qu'**il comprend les étapes suivantes :
- Connexion de l'infrastructure informatique matérielle et logicielle (2) à la base de données blockchain par le logiciel de gestion et d'automatisation (4) d'opérations informatiques,
- Minage par les ressources informatiques (21) de l'infrastructure informatique d'une chaine de blocs d'au moins une base de données de chaines de blocs (5) par l'intermédiaire du logiciel de gestion et d'automatisation (4) d'opérations informatiques,
- Suivi des performances des opérations de minage et enregistrement des valeurs desdites performances dans une base de données du système.

12. Procédé selon la revendication précédente, le procédé comprenant en outre une étape de comparaison des valeurs desdites performances enregistrées à des valeurs de performances contrôle.

13. Procédé selon l'une des revendications 11 à 12, le procédé comprenant en outre une étape d'indication, suite à la comparaison, du statut du contrôle qualité de l'infrastructure informatique.

14. Procédé selon l'une des revendications 11 à 13, dans lequel le minage par les ressources informatiques (21) est réalisé sur au moins deux chaines de blocs (5) différentes.
